(19) Europäisches Patentamt
European Patent Office
Office européen des brevets

(11) **EP 4 726 555 A1**

(12) **EUROPEAN PATENT APPLICATION**

(43) Date of publication:
**15.04.2026 Bulletin 2026/16**

(21) Application number: **24205321.3**

(22) Date of filing: **08.10.2024**

(51) International Patent Classification (IPC):
***G06F 11/3668*** *(2025.01)*

(52) Cooperative Patent Classification (CPC):
**G06F 11/3688; G06F 11/3696;** G06F 11/3684;
G06F 11/3692

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bayerische Motoren Werke
Aktiengesellschaft
80809 München (DE)**

(72) Inventor: **Nenchev, Vladislav
80687 München (DE)**

(54) **METHOD AND SYSTEM FOR FUNCTIONAL REQUIREMENT VERIFICATION OF DRIVING
AUTOMATION SYSTEM FEATURES**

(57) The present disclosure relates to verifying a functional requirement of a driving automation system feature, which is configured to be performed by a plurality of vehicles of varying vehicle types. To verify a driving automation system feature for a given vehicle type, a combined vehicle type state model is derived based on one or more characteristics of the given vehicle type. The combined vehicle type state model provides a future vehicle type state based on a current vehicle state and a control output of the driving automation system feature. Further, a type operational design domain (ODD) and a vehicle type safe state set are obtained. If the combined vehicle type safe state model outputs future vehicle type states within the type ODD for all control outputs determined by the driving automation system feature for the vehicle type safe state set, the driving automation system feature is verified.

Fig. 3

EP 4 726 555 A1

**Description**

TECHNICAL FIELD

The invention generally relates to verifying a functional requirement of a driving automation system feature and more precisely to verifying said functional requirement of the driving automation system feature prior to deployment of the driving automation system feature to multiple vehicles of different vehicle types.

BACKGROUND

Vehicle manufacturers develop and update various vehicle types with different hardware characteristics concurrently. Accordingly, the development of software and in particular of driving automation system features, such as a lane keeping assistant or an adaptive cruise control, which are to be deployed across the various vehicle types, needs to ensure that all functional requirements are complied with for each vehicle type. To this end, the software under development is typically installed in test vehicles of the various vehicle types and tested during driving of the test vehicles. However, such testing requires driving long distances by test drivers for each vehicle type. Further, since such testing is dependent on the driving environment of the test vehicles, which may or may not cause the test vehicles to encounter situations critical to testing a functional requirement of a given driving automation system feature, such testing does not necessarily ensure compliance with the functional requirement of the given driving automation system and may thus cause incorrect verification of the given driving automation system feature.

It is therefore an objective of the present disclosure to enable verification of a functional requirement of a driving automation system feature without requiring lengthy and multiple test drives while causing the driving automation system to verifiably encounter all conceivable driving situations and driving environments.

SUMMARY OF THE INVENTION

To achieve this objective, the present disclosure provides a method configured to verify a functional requirement of a driving automation system feature configured to be performed by a plurality of vehicles. Each vehicle is of a vehicle type out of a plurality of vehicle types, The method comprises, for each vehicle type of the plurality of vehicle types: deriving a combined vehicle type state model based on one or more characteristics of the corresponding vehicle type, each combined vehicle type state model being indicative of a future vehicle type state of the corresponding vehicle type in view of a control output of the driving automation system feature and a current vehicle type state of the corresponding vehicle type; obtaining a type operational design domain (ODD) defining one or more operating conditions under which the driving automation system feature is configured to function in view of the one or more characteristics of the corresponding vehicle type; obtaining, based on the corresponding combined vehicle type state model and the corresponding type ODD, a vehicle type safe state set, each vehicle type state of the vehicle type safe state set being a vehicle type state causing the corresponding vehicle type to operate in the corresponding type ODD; and verifying the functional requirement of the driving automation system feature based on control outputs determined by the driving automation system feature based on the vehicle type safe state set, wherein the functional safety of the driving automation system feature is verified if the determined control outputs cause the vehicle type to be in future type vehicle states corresponding to the vehicle type safe state set; and, if the driving automation system feature is verified for all vehicle types of the plurality of vehicle types, providing the driving automation system feature to each vehicle of the plurality of vehicles.

The present disclosure further provides a corresponding computational device and a corresponding non-transitory computer-readable storage medium.

BRIEF DESCRIPTION OF THE DRAWINGS

Examples of the present disclosure will be described with reference to the following appended drawings, in which like reference signs refer to like elements.

Fig. 1 shows a flowchart of a method configured to verify a functional requirement of a driving automation system feature according to examples of the present disclosure.

Fig. 2 illustrates deriving a combined vehicle type state model and obtaining a vehicle type safe state set according to examples of the present disclosure.

Fig. 3 illustrates verifying a functional requirement of a driving automation system feature according to examples of the present disclosure.

Fig. 4 illustrates a computational device configured to perform the method of Fig. 1 according to examples of the present disclosure.

Fig. 5 illustrates a vehicle according to examples of the present disclosure.

Fig. 6 illustrates an automotive control unit configured to perform driving automation system features according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

The present disclosure provides an approach of verifying a functional requirement of a driving automation system feature based on a combined vehicle type state model, i.e. a model derived from characteristics of a given vehicle type and based on laws of motion. The combined vehicle type state model takes control outputs of the driving automation system feature to be tested as well as a current vehicle type state as input and outputs a future vehicle state as output. The control outputs of the driving automation system feature are likewise determined by the driving automation system feature based on the current vehicle type state.

During verification, the current vehicle type states provided to the combined vehicle type state model and the driving automation system feature belong to a vehicle type safe state set, which only includes vehicle type states within an operational design domain of the given vehicle type. If the combined vehicle type state model of the given vehicle type only outputs future vehicle type states based on the vehicle type states of the vehicle type safe state set and the corresponding control outputs, which are likewise included in the vehicle type safe state set, the functional requirement of the driving automation system feature is verified.

Verifying the functional requirement of the driving automation system feature based on the combined vehicle type state model and the vehicle type safe state set may be performed outside a vehicle, i.e. in a software testing environment, and thus without any test drives. Moreover, by basing the verification on the vehicle type states of the vehicle type safe state set, the driving automation system feature is exposed to all conceivable vehicle type states. Thus, the verification approach of the present disclosure does not rely on encountering vehicle type states in the real world and is thus not liable to lead to incorrect verifications.

Following the verification, the driving automation system feature is provided to all vehicles of the vehicle types for which the driving automation system feature has been verified, e.g. as part of an over the air (OTA) update or during initial installation of the vehicle software during manufacture of the vehicle.

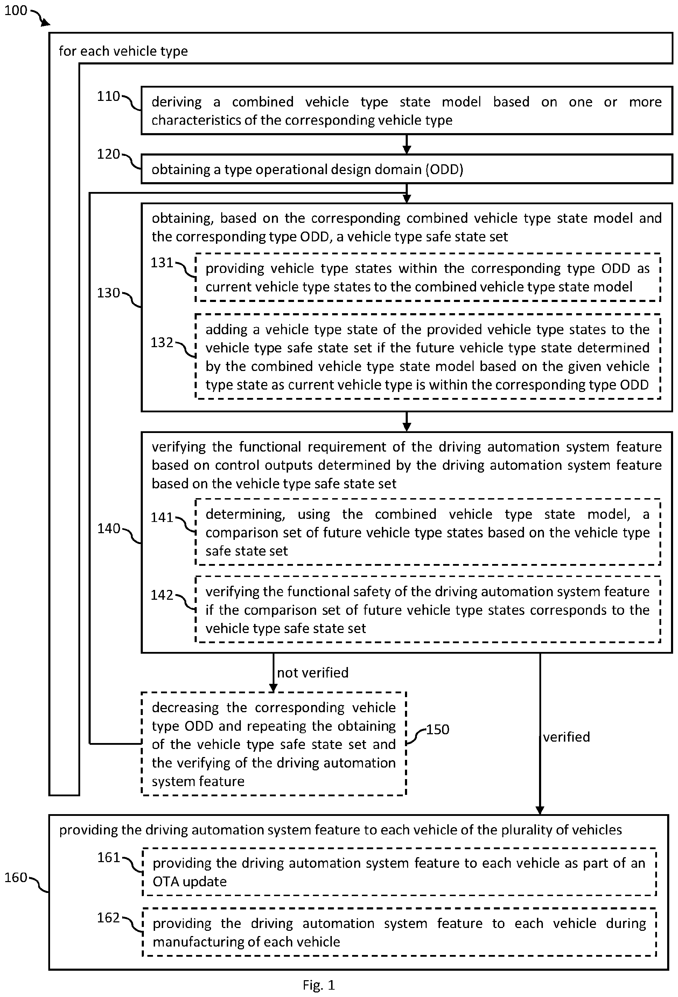

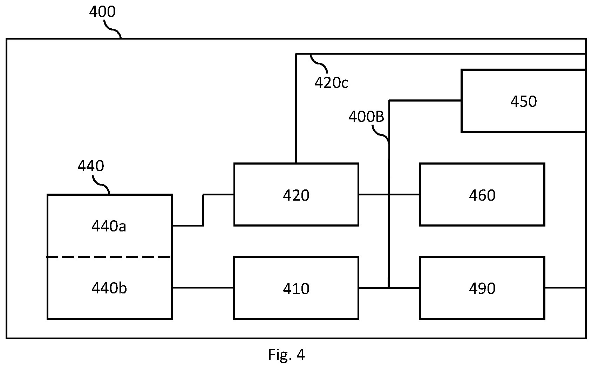

This general concept will now be described with reference to the appended drawings, with Figs. 1 to 3 illustrating a method configured to verify a functional requirement od a driving automation system feature as well as specific aspects thereof. Figs. 4 to 6 illustrate example computational devices and an example vehicle to further illustrate the implementation and the technical environment of the present disclosure.

It will be understood that dashed boxes in Fig, 1 illustrate optional method steps.

Fig. 1 shows a flowchart of method 100. Method 100 is configured to verify a functional requirement of a driving automation system feature. The driving automation system feature is configured to be performed by a plurality of vehicles, with each vehicle being of a vehicle type out of a plurality of vehicle types.

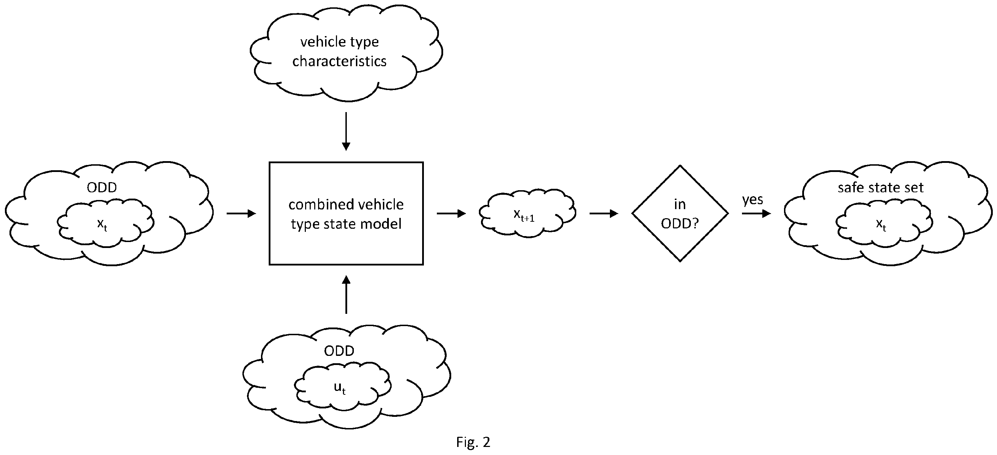

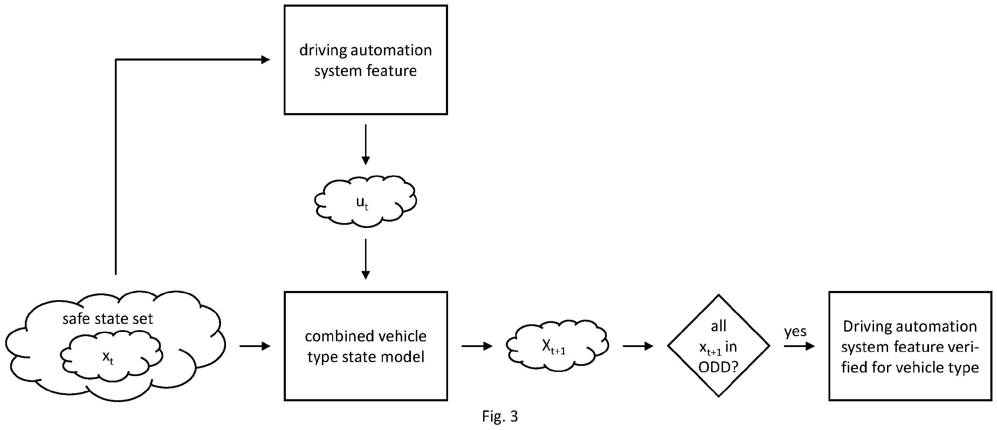

In the context of the present disclosure, driving automation system feature is to be understood in the sense of standard J3016 of SAE International as design-specific functionality of a driving automation system at a given level of driving automation, i.e. any one of levels 1 to 5 of driving automation as defined in the taxonomy of driving automation of standard J3016. For example, the driving automation system feature may be a level 1 lane centering functionality or a level 3 traffic jam assistant on controlled-access highways, i.e. a functionality controlling the longitudinal and lateral motion of a vehicle up to a predefined speed on controlled-access highways. Accordingly, the driving automation system feature provides control outputs, denoted as $u_t$ in Figs. 2 and 3 to vehicle 500, which may include a longitudinal control output and/or a lateral control output, depending on the functionality and the automation level of the driving automation system feature. For example, the control output $u_t$ may include an acceleration a if the functionality of the driving automation system feature includes lateral control and may include a curvature $\kappa$, a steering angle $\delta$ and/or a change in curvature $\dot{\kappa}$ if the functionality of the driving automation system feature includes longitudinal control. It will be understood that the control output may include fewer, further or different control parameters depending on the functionality of the driving automation system feature.

Vehicle in the context of the present disclosure, such as vehicle 500, refers to any kind of motor vehicle configured to transport people and/or cargo. The motor of vehicle 500 may be any kind of motor, such as an electric motor or an internal combustion engine. Vehicle 500 may e.g. be a passenger vehicle. It will however be understood that vehicle 500 may also be a bus, a truck or any other kind of vehicle including one or more automotive sensors 510 and an automotive control unit 600 enabling vehicle 500 to perform the driving automation system feature verified by method 100. The one or more automotive sensors 510 may thus be any type of automotive sensor configured to capture automotive sensor data indicative of a driving environment of vehicle 500, thereby providing environmental awareness enabling the performance of the driving automation system feature.

It will be understood that vehicle 500 may be configured to perform multiple driving automation system features, which may individually be verified by method 100.

Vehicle type in the context of the present disclosure refers to a specific vehicle model designed and updated by a given vehicle manufacturer. Taking a vehicle manufacturer X as an example, manufacturer X may design, manufacture and update a compact car A, a mid-size car B and a sport utility vehicle C. Further, for each of the different car types, manufacturer X may develop and manufacture a current model year, e.g. model year 2024 and update some preceding model years, such as model years 2015 to 2023, with the different cars of different model years respectively having different characteristics. Each car type of each model year corresponds to a vehicle type. In the example of manufacturer X, the exemplary plurality of vehicle types thus includes thirty vehicle types. Since vehicle manufacturer X may develop a given driving automation system feature for all thirty vehicle types, method 100 thus allows to verify a functional requirement of a given driving automation system feature across all thirty vehicle types and thus the deployment of a given driving automation system feature to all vehicles of manufacturer X of the corresponding vehicle types.

Functional requirement in the context of the present disclosure refers to requirements a given driving automation system feature needs to fulfill in order to ensure correct performance of the dynamic driving task (DDT) or at least one of the DDT subtasks, depending on the level of driving automation provided by a driving automation system feature. That is, the functional requirement defines to what extent correct performance of all of the real-time operational and tactical functions required to operate a vehicle in on-road traffic, excluding the strategic functions, i.e. the DDT as defined in standard J3016, or at least subtasks thereof needs to be ensured by a given driving automation system feature. To this end, the functional requirement may be one of a functional safety or a safety of intended functionality (SOTIF) of the driving automation system feature, with bot terms to understood according to the respective ISO standards. Accordingly, a given driving automation system feature is considered to achieve SOTIF if, according to standard ISO 26262-1:2018, a given driving automation system feature ensures the absence of unreasonable risk due to hazards caused by malfunctioning behavior of a given driving automation feature. Likewise, a given driving automation system feature is considered to achieve SOTIF if, according to standard ISO 21448:2022, a given driving automation system feature ensures the absence of unreasonable risk due to hazards resulting from functional insufficiencies of the intended functionality or its implementation of a given driving automation system feature.

As illustrated in Fig. 1, steps 110 to 150 are performed for each vehicle type individually for which the driving automation system feature is to be verified. Returning to the example of manufacturer X, steps 110 to 150 may thus be performed thirty times. It will be understood that the steps may be performed for the various vehicle types completely in parallel, partially in parallel or subsequently, depending on the implementation of method 100 and the processing power provided by the computational device performing method 100.

In step 110, method 100 derives a combined vehicle type state model. The combined vehicle type state model is indicative of a future vehicle type state of the corresponding vehicle type in view of control output $u_t$ of the driving automation system feature and a current vehicle type state of the corresponding vehicle type. In Figs. 2 and 3, the current vehicle type state is referred to as $x_t$ and the future vehicle type state is referred to as $x_{t+1}$. That is, index t refers to a current point in time while index t+1 refers to a future point in time, which may be an amount of time in the future compared to the current point in time which is based on the time it takes the driving automation system feature to determine control output $u_t$.

Depending on the functionality of the driving automation system feature to be verified, current vehicle type state $x_t$ and future vehicle type state $x_{t+1}$ may include various parameters relating to the state of a vehicle type. If the driving automation system feature to be verified is configured to perform lateral control, current vehicle type state $x_t$ and future vehicle type state $x_{t+1}$ may include a distance to center line of a current lane and a relative angle to the center line. If the driving automation system feature to be verified is configured to perform lateral control, current vehicle type state $x_t$ and future vehicle type state $x_{t+1}$ may include a headway, i.e. a distance to a preceding vehicle, and an instant speed of the vehicle type. If the driving automation system feature is configured to perform both lateral control and longitudinal control, current vehicle type state $x_t$ and future vehicle type state $x_{t+1}$ may include a combination of the aforementioned parameters. It will be understood that current vehicle type state $x_t$ and future vehicle type state $x_{t+1}$ may include fewer, further or different parameters suitable to describe current vehicle type state $x_t$ and future vehicle type state $x_{t+1}$ in view of the lateral and/or longitudinal control of the driving automation system feature to be verified.

As discussed above, each vehicle type may differ from other vehicle types in terms of one or more characteristics. The characteristics of a given vehicle type determine how a given vehicle type reacts to control output $u_t$ and further determine the information content of any data provided to the driving automation system feature to be verified. To account for this fact, the combined vehicle type state model is based on one or more characteristics, which may be hardware and/or software characteristics of a given vehicle type. For example, the one or more characteristics of a given vehicle type may include one or more capturing characteristics of automotive sensors 510 of a given vehicle type, such as capturing times, a resolution of the captured automotive data, a capturing range and/or an average noise level within the captured automotive sensor data. It will be understood that these example characteristics may relate to both automotive sensors 510 capturing data indicative of a driving environment as well as to capturing data indicative of internal parameters of a given vehicle type. The one or more characteristics of a given vehicle type may further include one or more characteristics of an object detection and classification performed by a given vehicle type based on automotive sensor data of automotive sensors 510. That is, the one or more characteristics may include information on how a given vehicle type determines the environmental awareness of the driving environment provided to the driving automation system feature to be verified. The one or more characteristics of the object detection and classification may for example include an uncertainty distribution of the object detection and classification and/or an average uncertainty of a determination of each object class determinable by the object detection and classification. That is, the one or mor characteristics of a given vehicle type may include information on the uncertainty of a given vehicle type when determining a specific object class or an overall uncertainty of the object instance detection and classification.

In summary, the one or more characteristics of a given vehicle type may include hardware parameters indicative of how a given vehicle type is configured to capture automotive sensor data indicative of the driving environment when a vehicle of a given vehicle type is deployed on the road and/or software parameters indicative of how the automotive sensor data indicative of the driving environment are processed by a given vehicle type. That is, the one or more characteristics of a given vehicle type may include any type of parameter indicative of how the driving automation system feature to be verified is provided with information on the driving environment by a given vehicle type.

In order to be indicative of future vehicle type state $x_{t+1}$, the combined vehicle type state model may further be based on a motion matrix, an internal input matrix and an external input matrix of the corresponding vehicle type. The motion matrix may describe the motion of the vehicle based on laws of motion, such as e.g. defined by Newtonian mechanics, Lagrangian mechanics or Hamiltonian mechanics. In other words, the motion matrix may determine how the current vehicle type state $x_t$ and the control output of the driving automation system feature to be verified lead to the future vehicle type state $x_{t+1}$. The internal input matrix may provide a representation of the impact of the one or more characteristics of a given vehicle type on the awareness of the driving automation system feature to be verified of internal parameters of a given vehicle type and thus on the impact of this awareness on the control output provided by the driving automation system feature to be verified. The external input matrix may provide a representation of the one or more characteristics of a given vehicle type on the environmental awareness, i.e. the external awareness, of the driving automation system feature to be verified and thus on the impact of the environmental awareness on the control output provided by the driving automation system feature to be verified.

Accordingly, the combined vehicle type state model may in some examples of the present disclosure be defined as shown in equation (1):

$$x_{t+1} = M_n x_t + I_{int,n} u_t + I_{ext,n} u_t + e_{n,t} \qquad (1)$$

In equation (1), in addition to the previously discussed parameters, $x_t$, $x_{t+1}$ and $u_t$, parameters $I_{int,n}$ and $I_{ext,n}$ respectively denote the internal input matrix and the external input matrix of a given vehicle type n. Parameter $M_n$ denotes the motion matrix of a given vehicle type n. Parameter $e_{n,t}$ denotes a weighted error term of the determination of future vehicle type state $x_{t+1}$ at time t for a given vehicle type, which may e.g. include an error matrix $E_n$ indicative of error parameters, such as noise, of various automotive sensors 510, weighted by a time-based weighting parameter $w_t$.

Given that the determination of the control output by the driving automation system feature to be verified may be subject to a delay due to the time expiring between the sensors capturing automotive sensor data indicative of the current vehicle type state $x_t$ and the determination of the control output, equation (1) may also be modified to delay at least the control output multiplied by the internal input matrix by a control delay $\tau_n$. In such cases, equation (10 may be modified as shown in equation (2):

$$x_{t+1} = M_n x_t + I_{int,n} u_{t-\tau_n} + I_{ext,n} u_t + e_{n,t} \qquad (2)$$

It will be understood that the control output multiplied by the external input matrix may be similarly delayed.

In both equations (1) and (2), motion matrix $M_N$, internal input matrix $I_{int,n}$ and external input matrix $I_{ext,n}$ are matrices. Current vehicle type state $x_t$, future vehicle type state $x_{t+1}$, control input $u_t$, and weighted error term $e_{n,t}$ may be scalars or may be vectors, depending on the dimensionality of current vehicle type state $x_t$ and future vehicle type state $x_{t+1}$. The dimensionality of current vehicle type state $x_t$ and future vehicle type state $x_{t+1}$ depend on the number of vehicle parameters affected by the control output of the driving automation system feature to be verified, which in particular depends on whether the functionality of the driving automation system feature to be verified includes lateral control, longitudinal control or both.

In step 120, method 100 obtains a type operational design domain (ODD). Each type ODD defines one or more operating conditions under which the driving automation system feature to be verified is configured to function in view of the one or more characteristics of the corresponding vehicle type. For example, if the driving automation system feature to be verified is a level 4 highway pilot feature, the type ODD may include a target speed and a preferred headway to a preceding vehicle set by a user as well as capturing characteristics of automotive sensors 510 in order to define how much distance should be kept to vehicles in the vicinity of a vehicle of a given vehicle type in view of the user preference and the one or more characteristics of a given vehicle type. In other words, the type ODD may include vehicle parameters set by a user and/or vehicle parameters determined by the functionality of the driving automation system feature to be verified in view of the one or more characteristics of a given vehicle type, which may limit the vehicle parameters set by the user and/or the vehicle parameters determined by the functionality of the driving automation system feature to be verified. For the purpose of verifying a given driving automation system feature, any vehicle parameters of the type ODD which may be set by a user may be set to a value causing the highest constraints for the driving automation system feature to be verified.

In step 130, method 100 obtains a vehicle type safe state set based on the corresponding combined vehicle type state model and the corresponding type ODD obtained in steps 110 and 120. Each vehicle type state of the vehicle type safe state set is a vehicle type state causing a given vehicle type to operate in the corresponding type ODD. That is, each vehicle type state of the vehicle type safe state set complies with the vehicle parameters based on user settings and/or the functionality of the driving automation system feature to be verified in view of the one or more characteristics of a given vehicle type.

The vehicle type safe state set of a given vehicle type may be obtained by method 100 from a specification of a given vehicle type. Alternatively, method 100 may also derive the vehicle type safe state set of a given vehicle type based on steps 131 and 132.

Method 100 may in step 131 provide vehicle type states within the type ODD of a given vehicle type as current vehicle type states $x_t$ to the combined vehicle type state model, thereby causing the combined vehicle type state model to determine corresponding future vehicle type states $x_{t+1}$. If the corresponding future vehicle type states $x_{t+1}$ determined by the combined vehicle type state model are also within the type ODD, method 100 may in step 132 add a given vehicle type state of the provided vehicle type states to the vehicle type safe state set. In other words, method 100 may in steps 131 and 132 determine the vehicle type safe state set based on current vehicle type states $x_t$ within the type ODD, which lead to future vehicle type states $x_{t+1}$ as determined by the combined vehicle type state model which are likewise within the type ODD.

Steps 110, 131 and 132 are illustrated in Fig. 2. As shown in Fig. 2, the one or more vehicle type characteristics are used to derive the combined vehicle type state model as discussed with regard to step 110. Further, the vehicle type safe state set in Fig. 2 is obtained by providing current vehicle type states $x_t$ within the type ODD as well as control inputs $u_t$ within the type ODD to the combined vehicle type state model, as illustrated by both types of parameter being enclosed in the could illustrating the type ODD. That is, in implementations of the present disclosure in which method 100 includes steps 131 and 132 and thus determines the vehicle type safe state set, the control outputs $u_t$ provided to the combined vehicle type state model may not be provided by the driving automation system feature to be verified but may be any type of control output $u_t$ within the type ODD discussed above. If the resulting future vehicle type states $x_{t+1}$ are within the type ODD, the corresponding current vehicle type states $x_t$ are added to the safe state set, as illustrated by the cloud illustrating the vehicle type safe state set including the could illustrating the current vehicle type state $x_t$.

In step 140, method 100 verifies the functional requirement of the driving automation system feature based on control outputs $u_t$ determined by the driving automation system feature to be verified based on the vehicle type safe state set obtained in step 130. That is, the functional safety of the driving automation system feature is verified if the determined control outputs $u_t$ cause a given vehicle type to be in future type vehicle states $x_{t+1}$ corresponding to the vehicle type safe state set.

To verify the driving automation system feature in accordance with step 140, step 140 may include steps 141 and 142. In step 141, method 100 may determine a comparison set of future vehicle type states based on the vehicle type safe state set using the combined vehicle type state model. Each future vehicle type state corresponds to a future vehicle type state determined by the vehicle type state model for a given vehicle type safe state of the vehicle type safe state set. If the comparison set of future vehicle type states corresponds to the vehicle type safe state set, method 100 may proceed in step 142 to verify the functional safety of the driving automation system feature.

The verification of the driving automation system feature to be verified as discussed above with regard to steps 140, 41 and 142 is illustrated in Fig. 3. The vehicle type states included in the vehicle type safe state set are provided as current vehicle type states $x_t$ to the driving automation system feature in order to determine control outputs $u_t$. In addition, the vehicle type states included in the vehicle type safe state set as well as the corresponding control outputs $u_t$ are provided as current vehicle type states $x_t$ to the combined vehicle type state model in order to determine the comparison set of future vehicle type states $x_{t+1}$. The comparison set of future vehicle type states $x_{t+1}$ is then compared with the vehicle type safe state set. If all future vehicle type states $x_{t+1}$ of the comparison set are within the type ODD, the driving system automation feature is verified for the corresponding vehicle type.

If the functional safety requirement of the driving automation system feature is not verified for a given vehicle type in step 140, method 100 may decrease the corresponding vehicle type ODD in step 150 and repeat steps 130 and 140 in order to attempt to verify the driving automation system feature for a given vehicle based on the decreased type ODD. The type ODD may be decreased by further limiting any parameters specified in the type ODD, such as reducing a maximum capture range of automotive sensors 510, by increasing capture delays of automotive sensors 510 of internal parameters and/or of the driving environment or by increasing processing delays by modules of a given vehicle type responsible for performing object instance detection and classification. More generally, decreasing the type ODD thus refers to limiting any of the parameters in the type ODD, which for a given parameter may include increasing or decreasing the given parameter.

In step 160, method 100 provides the driving automation system feature to each vehicle of the plurality of vehicles if the driving automation system feature is verified for all vehicle types of the plurality of vehicle types. The provision of the verified driving automation system feature may occur during various stages of a vehicle, such as during development, manufacture or maintenance of the vehicle. To this end, step 160 may include steps 161 and/or 162. In step 161, method 100 may provide the verified driving automation system feature to each vehicle as part of an OTA update. In step 162, method 100 may provide the verified driving automation system feature to each vehicle during manufacturing of each vehicle.

To summarize, method 100 enables verifying a driving automation system feature for a plurality of vehicle types with differing software and/or hardware characteristics based on a formalized verification approach using a combined vehicle type state model which models the behavior of a given vehicle type. Accordingly, the verification process can be performed outside of vehicles of a given vehicle type, e.g. on a computational device as discussed subsequently with reference to Fig. 4, which alleviates the need for lengthy test drives and the reliance on the unpredictable driving environment during these test drives.

Fig. 4 shows computational device 400 configured to perform method 100. Computational device 400 may include a processor 410, a graphics processing unit (GPU) 420, a memory 440, a removable storage 450, a storage 460 and a communication interface 490.

Processor 410 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 410 may perform instructions causing computational device 400 to perform method 100. Processor 410 may be directly coupled to any of the components of computational device 400 or may be directly coupled to memory 430, GPU 420 and device bus 400B.

GPU 420 may be any kind of processing unit optimized for processing graphics related instructions or more generally for parallel processing of instructions. As such, GPU 420 may be configured to generate a display of information, to which end GPU 420 may be coupled to a display via connection 420C. GPU 420 may further perform at least a part of method 100 to enable fast parallel processing of instructions relating to method 100. It should be noted that in some embodiments, processor 410 may determine that GPU 420 need not perform instructions relating to method 100. GPU 420 may be directly coupled to any of the components of computational device 400 or may be directly coupled to processor 410 and memory 430. In some embodiments, GPU 420 may also be coupled to device bus 400B.

Memory 440 may be any kind of fast storage enabling processor 410 and GPU 420 to store instructions for fast retrieval during processing of instructions as well as to cache and buffer data. Memory 440 may be a unified memory coupled to processor 410 and GPU 420 in order to enable allocation of memory 440 to processor 410 and GPU 420 as needed. Alternatively, processor 410 and GPU 420 may be coupled to separate processor memory 440a and GPU memory 440b.

Removable storage 450 may be a storage device which can be removably coupled with computational device 400. Examples include a digital versatile disc (DVD), a compact disc (CD), a Universal Serial Bus (USB) storage device, such as an external SSD, or a magnetic tape. It should be noted that removable storage 450 may store data, such as instructions of method 100, may be omitted.

Storage 460 may be a storage device enabling storage of program instructions and other data. For example, storage 460 may be a hard disk drive (HDD), a solid state disk (SSD) or some other type of non-volatile memory. Storage 460 may for example store instructions of method 100.

Removable Storage 450 and storage 460 may be coupled to processor 410 via system bus 400B. System bus 400B may be any kind of bus system enabling processor 410 and optionally GPU 420 to communicate with the other devices of computational device 400. The system bus may for example be a Peripheral Component Interconnect express (PCIe) bus or a Serial AT Attachment (SATA) bus.

Communications interface 490 may enable computational device 400 to interface with external devices, either directly or via network, via a connection as illustrated by the line coupling communications interface 490 to the outside of automotive control unit 400. Communications interface 490 may for example enable computational device 400 to couple to a wired or wireless network, such as Ethernet or Wifi. Communications interface 490 may also include a USB port or a serial port to enable direct communication with an external device.

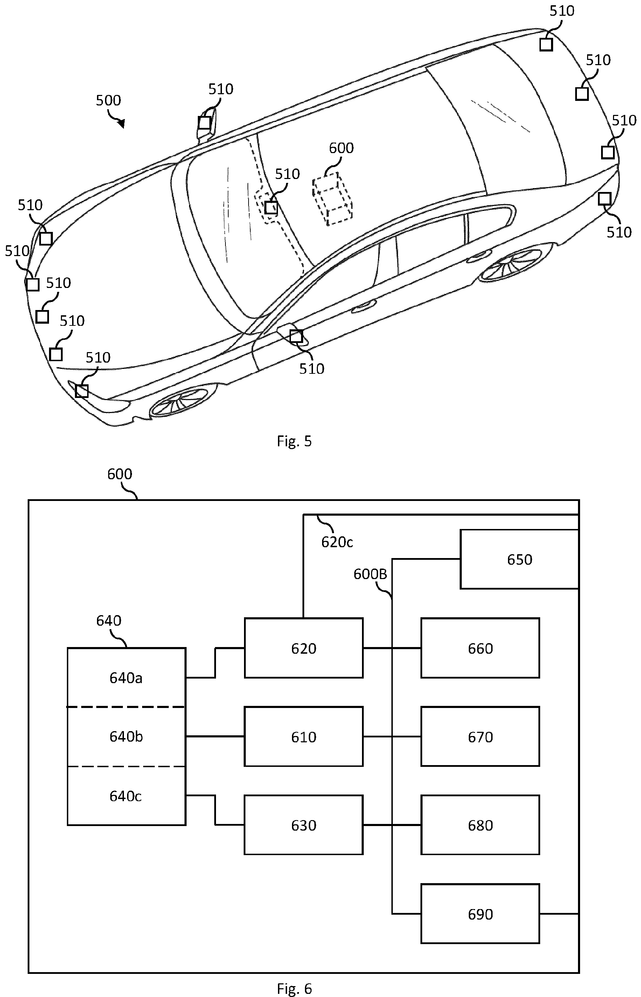

Fig. 6 shows automotive control unit 600 configured to perform one or more driving automation system features verified by method 100. Automotive control unit 600 may include a processor 610, a graphics processing unit (GPU) 620, automotive processing system 630, a memory 640, a removable storage 650, a storage 660, a cellular interface 670, a global navigation satellite system (GNSS) interface 680 and a communication interface 690.

Processor 610 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 610 may be directly coupled to any of the components of automotive control unit 600 or may be directly coupled to memory 630, GPU 620 and device bus 600B.

GPU 620 may be any kind of processing unit optimized for processing graphics related instructions or more generally for parallel processing of instructions. As such, GPU 620 may be configured to generate a display of information, such as information relating to one or more driving automation system features or telemetry data, to a driver of the vehicle, e.g. via a head-up display (HUD) or a display arranged within the view of the driver. GPU 620 may be coupled to the HUD and/or the display via connection 620C. GPU 620 may further perform at least a part the one or more driving automation system features to enable fast parallel processing of instructions relating to the one or more driving automation system features. It should be noted that in some embodiments, processor 610 may determine that GPU 620 need not perform instructions relating to the one or more driving automation system features. GPU 620 may be directly coupled to any of the components of automotive control unit 600 or may be directly coupled to processor 610 and memory 630. In some embodiments, GPU 620 may also be coupled to device bus 600B.

Automotive processing system 630 may be any kind of system-on chip configured to provide trillions of operations per second (TOPS) in order to enable automotive control unit 600 to perform the one or more driving automation system features while driving. Automotive processing system 630 may only interface with processor 610 or may interface with other devices via the system bus.

Memory 640 may be any kind of fast storage enabling processor 610, GPU 620 and automotive processing system 630 to store instructions for fast retrieval during processing of instructions as well as to cache and buffer data. Memory 640 may be a unified memory coupled to processor 610 and GPU 620 and automotive processing system 630 in order to enable allocation of memory 640 to processor 610, GPU 620 and automotive processing system 630 as needed. Alternatively, processor 610, GPU 620 and automotive processing system 630 may be coupled to separate processor memory 640a, GPU memory 540b and automotive processing system memory 640c.

Removable storage 650 may be a storage device which can be removably coupled with automotive control unit 600. Examples include a digital versatile disc (DVD), a compact disc (CD), a Universal Serial Bus (USB) storage device, such as an external SSD, or a magnetic tape. It should be noted that removable storage 550 may store data, such as instructions relating to the one or more driving automation system features, or may be omitted.

Storage 660 may be a storage device enabling storage of program instructions and other data. For example, storage 660 may be a hard disk drive (HDD), a solid state disk (SSD) or some other type of non-volatile memory.

Removable Storage 650 and storage 660 may be coupled to processor 610 via system bus 600B. System bus 600B may be any kind of bus system enabling processor 610 and optionally GPU 620 as well as automotive processing system 630 to communicate with the other devices of automotive control unit 600. The system bus may for example be a Peripheral Component Interconnect express (PCIe) bus or a Serial AT Attachment (SATA) bus.

Cellular interface 670 may be any kind of interface enabling automotive control unit 500 to communicate via a cellular network, such as a 4G network or a 5G network.

GNSS interface 680 may be any kind of interface enabling automotive control unit 600 to receive position data provided by a satellite network, such as the Global Positioning System (GPS), the Global Navigation Satellite System (GLONASS) or Galileo.

Communications interface 690 may enable automotive control unit 600 to interface with external devices, either directly or via network, via a connection as illustrated by the line coupling communications interface 690 to the outside of automotive control unit 600. Communications interface 690 may for example enable automotive control unit 600 to couple to a wired or wireless network, such as Ethernet, Wifi, a Controller Area Network (CAN) bus or any bus system appropriate in vehicles. For example, automotive control unit 600 may be coupled to the one or more automotive sensors 510 to receive information about the environment of vehicle 500 in order to classify objects in the vicinity of vehicle 500. Communications interface 590 may also include a USB port or a serial port to enable direct communication with an external device.

Automotive control unit 600 may be integrated with vehicle 500, e.g. beneath the cabin, under the dashboard or in the trunk of vehicle 500.

It will be understood that both computational device 400 and automotive control unit 600 may include further or fewer elements than shown in Figs. 4 and 6, as may be required by the actual implementations of computational device 400 and automotive control unit 600. Further, the above discussed elements may be distributed across multiple (sub) units of computational device 400 and automotive control unit 600.

The invention may further be illustrated by the following examples.

In an example, a method configured to verify a functional requirement of a driving automation system feature configured to be performed by a plurality of vehicles, wherein each vehicle is of a vehicle type out of a plurality of vehicle types, comprises: for each vehicle type of the plurality of vehicle types: deriving a combined vehicle type state model based on one or more characteristics of the corresponding vehicle type, each combined vehicle type state model being indicative of a future vehicle type state of the corresponding vehicle type in view of a control output of the driving automation system feature and a current vehicle type state of the corresponding vehicle type; obtaining a type operational design domain -ODD- defining one or more operating conditions under which the driving automation system feature is configured to function in view of the one or more characteristics of the corresponding vehicle type; obtaining, based on the corresponding combined vehicle type state model and the corresponding type ODD, a vehicle type safe state set, each vehicle type state of the vehicle type safe state set being a vehicle type state causing the corresponding vehicle type to operate in the corresponding type ODD; and verifying the functional requirement of the driving automation system feature based on control outputs determined by the driving automation system feature based on the vehicle type safe state set, wherein the functional safety of the driving automation system feature is verified if the determined control outputs cause the vehicle type to be in future type vehicle states corresponding to the vehicle type safe state set; and if the driving automation system feature is verified for all vehicle types of the plurality of vehicle types, providing the driving automation system feature to each vehicle of the plurality of vehicles.

In the example method, the functional requirement may be one of a functional safety or a SOTIF of the driving automation system feature.

In the example method, the one or more characteristics of the corresponding vehicle type may include one or more capturing characteristics of one or more automotive sensors of the corresponding vehicle type.

In the example method, the one or more characteristics of the corresponding vehicle type may include one or more characteristics of an object detection and classification performed by the corresponding vehicle type based on automotive sensor data of one or more automotive sensors of the corresponding vehicle type.

In the example method, the one or more characteristics of the object detection and classification may include at least one of an uncertainty distribution of the object detection and classification and an average uncertainty of a determination of each object class determinable by the object detection and classification.

In the example method, the control output of the driving automation system feature may at least be one of a longitudinal control output and a lateral control output.

In the example method, the verifying the functional safety of the driving automation system feature may include, for each vehicle type: determining, using the combined vehicle type state model, a comparison set of future vehicle type states based on the vehicle type safe state set, each future vehicle type state corresponding to a future vehicle type state determined by the vehicle type state model for a given vehicle type safe state of the vehicle type safe state set; and verifying the functional safety of the driving automation system feature if the comparison set of future vehicle type states corresponds to the vehicle type safe state set.

In the example method, the providing the driving automation system feature to each vehicle of the plurality of vehicle may include at least one of: providing the driving automation system feature to each vehicle as part of OTA update; and providing the driving automation system feature to each vehicle during manufacturing of each vehicle.

In the example method, the combined vehicle type state model may be indicative of the future vehicle type state based on a motion matrix, an internal input matrix and an external input matrix of the corresponding vehicle type.

In the example method, the combined vehicle type state model may be defined by $x_{t+1} = M_n x_t + I_{int,n} u_t + I_{ext,n} u_t + e_{n,t}$ wherein $x_{t+1}$ denotes the future vehicle type state, $M_n$ denotes the motion matrix, $I_{int,n}$ denotes the internal input matrix, $I_{ext,n}$ denotes the external input matrix, and $e_{n,t}$ denotes a weighted error term.

In the example method, the obtaining the vehicle type safe state set may include: providing vehicle type states within the corresponding type ODD as current vehicle type states to the combined vehicle type state model; and adding a vehicle type state of the provided vehicle type states to the vehicle type safe state set if the future vehicle type state determined by the combined vehicle type state model based on the given vehicle type state as current vehicle type is within the corresponding type ODD.

In an example, the method may further comprise, if the functional safety requirement of the driving automation system feature is not verified for one of the vehicle types of the plurality of vehicle types, decreasing the corresponding vehicle type ODD and repeating the obtaining of the vehicle type safe state set and the verifying of the driving automation system feature.

In an example, a computational device may comprise at least one processing unit; a memory coupled to the at least one processing unit and configured to store machine-readable instructions which cause the at least one processing unit to: for each vehicle type of the plurality of vehicle types: deriving a combined vehicle type state model based on one or more characteristics of the corresponding vehicle type, each combined vehicle type state model being indicative of a future vehicle type state of the corresponding vehicle type in view of a control output of the driving automation system feature and a current vehicle type state of the corresponding vehicle type; obtaining a type ODD defining one or more operating conditions under which the driving automation system feature is configured to function the corresponding vehicle type obtaining, based on the corresponding combined vehicle type state model and the corresponding type ODD, a vehicle type safe state set, each vehicle type state of the vehicle type safe state set being a vehicle type state causing the corresponding vehicle type to operate in the corresponding type ODD; and verifying the functional requirement of the driving automation system feature based on control outputs determined by the driving automation system feature based on the vehicle type safe state set, wherein the functional safety of the driving automation system feature is verified if the determined control outputs cause the vehicle type to be in future type vehicle states corresponding to the vehicle type safe state set; and if the driving automation system feature is verified for all vehicle types of the plurality of vehicle types, providing the driving automation system feature to each vehicle of the plurality of vehicles.

In the example computational device, the machine-readable instructions may further cause the at least one processing unit to perform the method according to any one of the preceding example methods.

In an example, a non-transitory computer-readable storage medium may store machine-readable instructions, which, if executed by at least one processing unit, may cause the at least one processing unit to: for each vehicle type of the plurality of vehicle types: deriving a combined vehicle type state model based on one or more characteristics of the corresponding vehicle type, each combined vehicle type state model being indicative of a future vehicle type state of the corresponding vehicle type in view of a control output of the driving automation system feature and a current vehicle type state of the corresponding vehicle type; obtaining a type ODD defining one or more operating conditions under which the driving automation system feature is configured to function the corresponding vehicle type; obtaining, based on the corresponding combined vehicle type state model and the corresponding type ODD, a vehicle type safe state set, each vehicle type state of the vehicle type safe state set being a vehicle type state causing the corresponding vehicle type to operate in the corresponding type ODD; and verifying the functional requirement of the driving automation system feature based on control outputs determined by the driving automation system feature based on the vehicle type safe state set, wherein the functional safety of the driving automation system feature is verified if the determined control outputs cause the vehicle type to be in future type vehicle states corresponding to the vehicle type safe state set; and if the driving automation system feature is verified for all vehicle types of the plurality of vehicle types, providing the driving automation system feature to each vehicle of the plurality of vehicles.

The preceding description has been provided to illustrate a method and a system for functional requirement verification of driving automation system features. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

**List of Reference Signs**

| | |
|---|---|
| 100 to 162 | method and method steps |
| 400 | data center processing unit |
| 400B | bus |
| 410 | CPU |
| 420 | GPU |
| 420c | connection |
| 440 | memory |
| 450 | removable storage |
| 460 | storage |
| 490 | communications interface |
| 500 | vehicle |
| 510 | automotive sensor |
| 600 | automotive control unit |
| 600B | bus |
| 610 | CPU |
| 620 | GPU |
| 620c | connection |
| 630 | automotive processing system |
| 640 | memory |
| 650 | removable storage |
| 660 | storage |

| 670 | cellular interface |
| 680 | GNSS interface |
| 690 | communications interface |

**Claims**

1. Method (100) configured to verify a functional requirement of a driving automation system feature configured to be performed by a plurality of vehicles, wherein each vehicle (500) is of a vehicle type out of a plurality of vehicle types, comprising:

   for each vehicle type of the plurality of vehicle types:

   deriving (110) a combined vehicle type state model based on one or more characteristics of the corresponding vehicle type, each combined vehicle type state model being indicative of a future vehicle type state ($x_{t+1}$) of the corresponding vehicle type in view of a control output ($u_t$) of the driving automation system feature and a current vehicle type state ($x_t$) of the corresponding vehicle type;
   obtaining (120) a type operational design domain -ODD- defining one or more operating conditions under which the driving automation system feature is configured to function in view of the one or more characteristics of the corresponding vehicle type;
   obtaining (130), based on the corresponding combined vehicle type state model and the corresponding type ODD, a vehicle type safe state set, each vehicle type state of the vehicle type safe state set being a vehicle type state causing the corresponding vehicle type to operate in the corresponding type ODD; and
   verifying (140) the functional requirement of the driving automation system feature based on control outputs ($u_t$) determined by the driving automation system feature based on the vehicle type safe state set, wherein the functional safety of the driving automation system feature is verified if the determined control outputs ($u_t$) cause the vehicle type to be in future type vehicle states ($x_{t+1}$) corresponding to the vehicle type safe state set; and

   if the driving automation system feature is verified for all vehicle types of the plurality of vehicle types, providing the driving automation system feature to each vehicle (500) of the plurality of vehicles.

2. The method (100) of claim 1, wherein the functional requirement is one of a functional safety or a safety of intended functionality -SOTIF- of the driving automation system feature.

3. The method (100) of any one of the preceding claims, wherein the one or more characteristics of the corresponding vehicle type include one or more capturing characteristics of one or more automotive sensors (510) of the corresponding vehicle type.

4. The method (100) of any one of the preceding claims, wherein the one or more characteristics of the corresponding vehicle type include one or more characteristics of an object detection and classification performed by the corresponding vehicle type based on automotive sensor data of one or more automotive sensors (510) of the corresponding vehicle type.

5. The method (100) of claim 4, wherein the one or more characteristics of the object detection and classification include at least one of an uncertainty distribution of the object detection and classification and an average uncertainty of a determination of each object class determinable by the object detection and classification.

6. The method (100) of any one of the preceding claims, wherein the control output ($u_t$) of the driving automation system feature is at least one of a longitudinal control output and a lateral control output.

7. The method (100) of any one of the preceding claims, wherein the verifying (140) the functional safety of the driving automation system feature includes, for each vehicle type:

   Determining (141), using the combined vehicle type state model, a comparison set of future vehicle type states ($x_{t+1}$) based on the vehicle type safe state set, each future vehicle type state ($x_{t+1}$) corresponding to a future vehicle type state ($x_{t+1}$) determined by the vehicle type state model for a given vehicle type safe state of the vehicle type safe state set; and
   verifying (142) the functional safety of the driving automation system feature if the comparison set of future vehicle

type states ($x_{t+1}$) corresponds to the vehicle type safe state set.

8. The method (100) of any one of the preceding claims, wherein the providing (160) the driving automation system feature to each vehicle (500) of the plurality of vehicle includes at least one of:

> providing (161) the driving automation system feature to each vehicle (500) as part of an over the air -OTA-update; and
> providing (162) the driving automation system feature to each vehicle (500) during manufacturing of each vehicle (500).

9. The method (100) of any one of the preceding claims, wherein the combined vehicle type state model is indicative of the future vehicle type state ($x_{t+1}$) based on a motion matrix, an internal input matrix and an external input matrix of the corresponding vehicle type.

10. The method (100) of claim 9, wherein the combined vehicle type state model is defined by

$$x_{t+1} = M_n x_t + I_{int,n} u_t + I_{ext,n} u_t + e_{n,t}$$

wherein:

> $x_{t+1}$ denotes the future vehicle type state,
> $M_n$ denotes the motion matrix,
> $I_{int,n}$ denotes the internal input matrix,
> $I_{ext,n}$ denotes the external input matrix,
> $e_{n,t}$ denotes a weighted error term.

11. The method (100) of any one of the preceding claims, wherein the obtaining (130) the vehicle type safe state set includes:

> providing (131) vehicle type states within the corresponding type ODD as current vehicle type states ($x_t$) to the combined vehicle type state model; and
> adding (132) a vehicle type state of the provided vehicle type states to the vehicle type safe state set if the future vehicle type state ($x_{t+1}$) determined by the combined vehicle type state model based on the given vehicle type state as current vehicle type state ($x_t$) is within the corresponding type ODD.

12. The method (100) of any one of the preceding claims, further comprising:
if the functional safety requirement of the driving automation system feature is not verified for one of the vehicle types of the plurality of vehicle types, decreasing (150) the corresponding vehicle type ODD and repeating the obtaining (130) of the vehicle type safe state set and the verifying (140) of the driving automation system feature.

13. Computational device (400), comprising:

> at least one processing unit (410, 420, 430);
> a memory (440, 450, 460) coupled to the at least one processing unit (410, 420, 430) and configured to store machine-readable instructions which cause the at least one processing unit to (410, 420, 430):

>> for each vehicle type of the plurality of vehicle types:

>>> derive a combined vehicle type state model based on one or more characteristics of the corresponding vehicle type, each combined vehicle type state model being indicative of a future vehicle type state of the corresponding vehicle type in view of a control output of the driving automation system feature and a current vehicle type state of the corresponding vehicle type;
>>> obtain a type operational design domain -ODD- defining one or more operating conditions under which the driving automation system feature is configured to function the corresponding vehicle type;
>>> obtain, based on the corresponding combined vehicle type state model and the corresponding type ODD, a vehicle type safe state set, each vehicle type state of the vehicle type safe state set being a vehicle type state causing the corresponding vehicle type to operate in the corresponding type ODD; and

verify the functional requirement of the driving automation system feature based on control outputs determined by the driving automation system feature based on the vehicle type safe state set, wherein the functional safety of the driving automation system feature is verified if the determined control outputs cause the vehicle type to be in future type vehicle states corresponding to the vehicle type safe state set; and

if the driving automation system feature is verified for all vehicle types of the plurality of vehicle types, provide the driving automation system feature to each vehicle of the plurality of vehicles.

14. The computational device (400) of claim 13, wherein the machine-readable instructions further cause the at least one processing unit (410, 420, 430) to perform the method according to any one of claims 2 to 12.

15. A non-transitory computer-readable storage medium (450, 460), storing machine-readable instructions, which, if executed by at least one processing unit (410, 420, 430), cause the at least one processing unit (410, 420, 430) to:

for each vehicle type of the plurality of vehicle types:

derive a combined vehicle type state model based on one or more characteristics of the corresponding vehicle type, each combined vehicle type state model being indicative of a future vehicle type state of the corresponding vehicle type in view of a control output of the driving automation system feature and a current vehicle type state of the corresponding vehicle type;
obtain a type operational design domain -ODD- defining one or more operating conditions under which the driving automation system feature is configured to function the corresponding vehicle type;
obtain, based on the corresponding combined vehicle type state model and the corresponding type ODD, a vehicle type safe state set, each vehicle type state of the vehicle type safe state set being a vehicle type state causing the corresponding vehicle type to operate in the corresponding type ODD; and
verify the functional requirement of the driving automation system feature based on control outputs determined by the driving automation system feature based on the vehicle type safe state set, wherein the functional safety of the driving automation system feature is verified if the determined control outputs cause the vehicle type to be in future type vehicle states corresponding to the vehicle type safe state set; and

if the driving automation system feature is verified for all vehicle types of the plurality of vehicle types, provide the driving automation system feature to each vehicle of the plurality of vehicles.

100

for each vehicle type

110 — deriving a combined vehicle type state model based on one or more characteristics of the corresponding vehicle type

120 — obtaining a type operational design domain (ODD)

obtaining, based on the corresponding combined vehicle type state model and the corresponding type ODD, a vehicle type safe state set

131 — providing vehicle type states within the corresponding type ODD as current vehicle type states to the combined vehicle type state model

130

132 — adding a vehicle type state of the provided vehicle type states to the vehicle type safe state set if the future vehicle type state determined by the combined vehicle type state model based on the given vehicle type state as current vehicle type is within the corresponding type ODD

verifying the functional requirement of the driving automation system feature based on control outputs determined by the driving automation system feature based on the vehicle type safe state set

141 — determining, using the combined vehicle type state model, a comparison set of future vehicle type states based on the vehicle type safe state set

140

142 — verifying the functional safety of the driving automation system feature if the comparison set of future vehicle type states corresponds to the vehicle type safe state set

not verified

decreasing the corresponding vehicle type ODD and repeating the obtaining of the vehicle type safe state set and the verifying of the driving automation system feature

150

verified

providing the driving automation system feature to each vehicle of the plurality of vehicles

161 — providing the driving automation system feature to each vehicle as part of an OTA update

160

162 — providing the driving automation system feature to each vehicle during manufacturing of each vehicle

Fig. 1

ODD

$x_t$

combined vehicle
type state model

ODD

$u_t$

vehicle type
characteristics

Fig. 2

$x_{t+1}$

in
ODD?

yes

safe state set

$x_t$

Fig. 3

EP 4 726 555 A1

16

Fig. 4

Fig. 5

Fig. 6

| | Europäisches Patentamt | | Application Number |
|---|---|---|---|
| | European Patent Office | **EUROPEAN SEARCH REPORT** | |
| | Office européen des brevets | | **EP 24 20 5321** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 469 635 A (CHONGQING CHANGAN AUTOMOBILE CO LTD) 13 December 2022 (2022-12-13) * the whole document * ----- | 1-15 | INV. G06F11/3668 |
| A | CN 117 931 682 A (CHINA AUTOMOTIVE TECH & RES CT) 26 April 2024 (2024-04-26) * the whole document * ----- | 1-15 | |
| A | EP 3 309 721 A1 (KPIT TECH LTD [IN]) 18 April 2018 (2018-04-18) * the whole document * ----- | 1-15 | |
| | | | **TECHNICAL FIELDS SEARCHED (IPC)** |
| | | | G06F |

The present search report has been drawn up for all claims

| Place of search | Date of completion of the search | Examiner |
|---|---|---|
| Munich | 21 March 2025 | Bozas, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 726 555 A1

## ANNEX TO THE EUROPEAN SEARCH REPORT
## ON EUROPEAN PATENT APPLICATION NO.

EP 24 20 5321

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | | Publication date | Patent family member(s) | | Publication date |
|---|---|---|---|---|---|
| CN 115469635 | A | 13-12-2022 | NONE | | |
| CN 117931682 | A | 26-04-2024 | NONE | | |
| EP 3309721 | A1 | 18-04-2018 | EP | 3309721 A1 | 18-04-2018 |
| | | | JP | 7064303 B2 | 10-05-2022 |
| | | | JP | 2018113015 A | 19-07-2018 |
| | | | US | 2018089911 A1 | 29-03-2018 |

EPO FORM P0459

For more details about this annex : see Official Journal of the European Patent Office, No. 12/82